# EUROPÄISCHE PATENTSCHRIFT

(11) **EP 0 413 044 B1**
(45) Veröffentlichungstag und Bekanntmachung des Hinweises auf die Patenterteilung: **02.11.1994**
(21) Anmeldenummer: 89115130.0
(22) Anmeldetag: 16.08.1989
(51) Int. Cl.: G05B 15/02

(54) **Flexibles Automatisierungssystem für variable industrielle Prozesse**
Flexible automation system for variable industrial processes
Système d'automatisation flexible pour procédés industriels variables

(43) Veröffentlichungstag der Anmeldung: 20.02.1991
(73) Patentinhaber: SIEMENS AKTIENGESELLSCHAFT, 80333 München (DE)
(72) Erfinder: Pajonk, Manfred, Dipl.-Ing., D-4630 Buchum 6 (DE)

(56) Entgegenhaltungen:
- EP-A- 0 107 191
- REGELUNGSTECHNISCHE PRAXIS, Band 26, Nr. 3, März 1984, Seiten 111-126; G.KUCHLER: "INTERKAMA '83: Digitale Prozessautomatisierungssysteme"
- AUTOMATISIERUNGSTECHNISCHE PRAXIS, Band 27, Nr. 4, April 1985, Seiten 192-199;W. AMMON: "Das Integrierte Automatisierungssystem von AEG-TELEFUNKEN"

## Beschreibung

Die Erfindung betrifft ein flexibles Automatisierungssystem für variable industrielle Prozesse, z.B. für die Prozesse auf einer Förderplattform für Öl oder Gas, mit über Busstrukturen oder Punkt-zu-Punkt-Verbindungen verknüpften Automatisierungsgeräten, denen Prozeßvariable in digitaler oder analoger Form aufgegeben werden, wobei die Busstrukturen Kommunikationsschnittstellen für den Abruf der Prozeßvariablen zum automatischen Ansprechen der Prozeßvariablen aus den Automatisierungsgeräten aufweisen und wobei jeder Prozeßvariablen ein Abrufsignal in codierter Form zugeordnet ist.

Im laufenden Betrieb von industriellen Prozessen ist es häufig notwendig, bei Veränderungen des Prozesses oder des Prozeßablaufes den Kommunikationsumfang und -ablauf schnell zu ändern. Bei Verwendung von Busstrukturen, aber auch bei der Verwendung von Punkt-zu-Punkt-Systemen ergibt sich bei jeder Änderung ein nicht unerheblicher, fehlerträchtiger Programmierungsaufwand. Im Laufe der Betriebszeit einer größeren Anlage kann dieser Programmierungsaufwand sogar den ursprünglichen Programmierungsaufwand überschreiten.

Es ist Aufgabe der Erfindung, ein flexibles Automatisierungssystem anzugeben, dessen Aufbau derart ist, daß der Programmierungsaufwand für Änderungen, aber auch für Neuprogrammierungen gegenüber den bisherigen Systemen und ihrer Programmierung erheblich verringert werden kann. Hierdurch soll insbesondere eine flexible, schnelle Anpassung an beim Betrieb der Anlage erhaltene neue Erkenntnisse erreicht werden. Die bisher bestehende Hemmschwelle zur Änderung der Einwirkung der Prozeßvariablen auf das Automatisierungssystem soll damit abgesenkt werden, so daß insgesamt ein besserer, den jeweiligen Anforderungen angepaßter, einfach änderbarer Betriebsablauf erhalten werden kann. Die Aufgabe wird im wesentlichen durch die im Betreff genannten Maßnahmen gelöst.

Aus der EP-0 107 191 ist ein automatisiertes System mit einem Hauptdatenbus, Schnittstellen und Subsystemen mit Datenkoordinatoren bekannt, bei denen über die Datenkoordinatoren Informationen über den Prozeßzustand, insbesondere die ausführbaren Funktionen, ausgetauscht werden. Die Prozeßvariablen werden in Subsystem-Controllern verarbeitet und das Ergebnis wird als Freigabesignal an die anderen Subsysteme über die Datenkoordinatoren, die tatsächlich Arbeitskoordinatoren darstellen, weitergegeben. Ein derartiges System ist nicht beliebig konfigurierbar, bei Änderungen nur ortsangabenabhängig umzuprogrammieren und gibt daher keinen Hinweis auf die Erfindung.

Es ist im Rahmen der Erfindung vorgesehen, daß in den Programmen der einzelnen Automatisierungsgeräte direkt und indirekt abrufbare Prozeßvariable verwendet werden. Hierdurch ist eine höchstmögliche Flexibilisierung des Automatisierungssystems gegeben, wobei besonders vorteilhaft für den Abruf der Prozeßvariablen die bekannten physikalischen und logischen Definitionen der Kommunikationsschnittstellen für die Automatisierungsgeräte verwendet werden.

Um eine Vereinfachung der Programmierung zu erhalten, ist vorgesehen, daß die Abrufsignale für die Prozeßvariablen programmgesteuert adressiert werden. So ist auch die ursprüngliche Programmierung besonders einfach und mit wenig Aufwand durchführbar, insbesondere wenn identische Prozeßvariable, auch wenn sie an unterschiedlichen Stellen im Prozeß auftreten, mit gleicher Codierung versehen werden.

Weitere Vorteile und Einzelheiten der Erfindung ergeben sich aus der nachfolgenden Beschreibung eines Ausführungsbeispiels anhand der Zeichnung und in Verbindung mit den Unteransprüchen.

Es zeigen:
- FIG 1: die Erfindung im Prinzipschaltbild und
- FIG 2: die Erfindung in Anwendung am Beispiel einer Förderplattform.

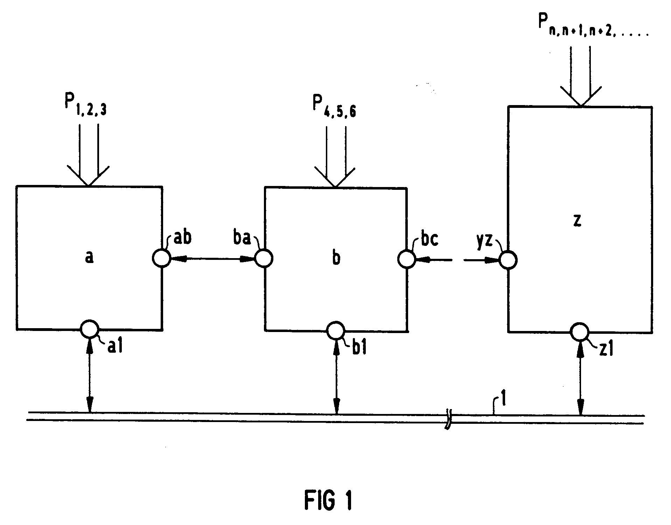

In FIG 1 bezeichnet 1 eine Busstruktur und a...z die einzelnen Automatisierungsgeräte. Den einzelnen Automatisierungsgeräten a...z sind die Prozeßvariablen (Parameter) P_{1,2,3...}P_{n, n+1, n+x} aufgegeben, die unterschiedlich, einer vorgegebenen Codierung entsprechend, codiert sind. Ihre Codierung entspricht praktisch einer Namensgebung und ist mit einem Eingabegerät automatisierbar.

Zwischen den einzelnen Automatisierungsgeräten a...z sind über Kommunikationsschnittstellen a1...z1, Verbindungen zu der Busstruktur 1 vorhanden. Darüber hinaus weist das Automatisierungssystem auch noch Punkt-zu-Punkt-Verbindungen zwischen den Kommunikationsschnittstellen ab...yz auf, deren Anordnung beliebig gewählt werden kann. Die Punkt-zu-Punkt-Verbindungen werden je nach den Anforderungen des Einzelfalles gewählt.

Für die Programmierung der einzelnen Automatisierungsgeräte, a...z für die Codierung usw. werden, wie für die Automatisierungsgeräte a...z selbst, bewährte Bausteine der Automatisierungstechnik verwendet, z.B. Simatic S5-Geräte der Firma Siemens mit einem Visualisierungssystem und Programmierungssystemen, aber auch Workstations aller Art. Insgesamt ergibt sich ein vernetztes System mit automatischer Ver- und Entsorgung der Kommunikationsschnittstellen mit dem Vorteil einer schnellen und fehlerlosen Anpassung bei Programm- bzw. Prozeßänderungen.

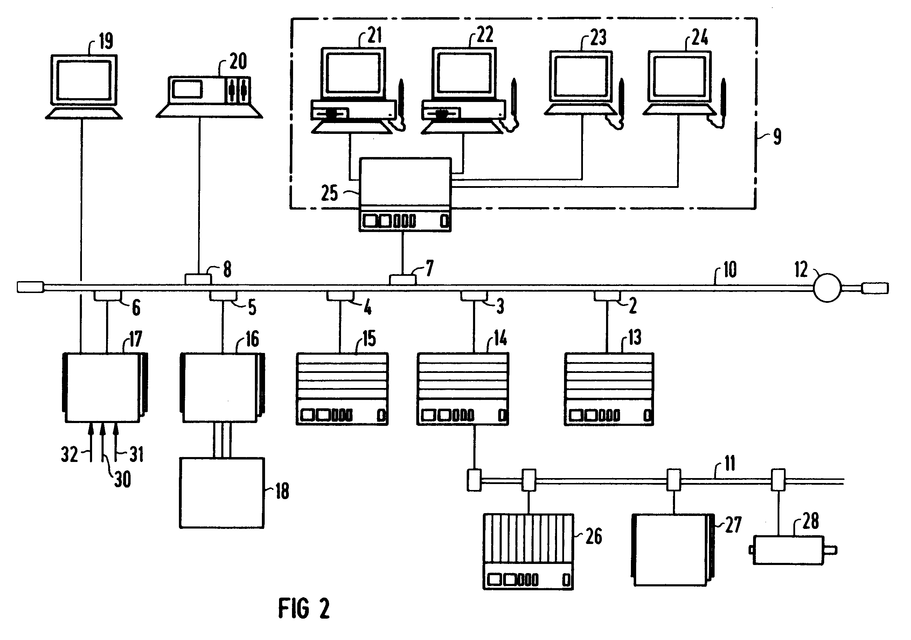

In FIG 2, die ein Automatisierungssystem für variable industrielle Prozesse, z.B. für die Prozesse auf einer Förderplattform für Öl oder Gas, in beispielhafter, jederzeit abänderbarer Weise zeigt, bezeichnet 10 den Haupt-Systembus. An den Haupt-Systembus 10 sind die einzelnen Automatisierungsgeräte 13, 14, 15, 16 und 17, z.B. beliebige Simatic S5-Geräte, über serielle Schnittstellen 2, 3, 4, 5, 6 angeschlossen. Desweiteren sind an den Haupt-Systembus 10 die zentrale Bedienungsstation 20 und die Station 25 zur Verbindung mit den Visualisierungsgeräten 21, 22, 23 und 24 über Schnittstellen 6, 7 angeschlossen. Die Visualisierungsgeräte 21, 22, 23 und 24 befinden sich vorzugsweise in einem Leitstandraum 9, in dem sich auch die zentrale Bedienungsstation 20 befinden kann.

Die zentrale Bedienungsstation 20 kann gleichzeitig als Programmierstation für das Gesamtsystem ausgebildet sein. Die zentrale Programmierung kann jedoch ebenso in einem gesonderten Gerät erfolgen. Die Automatisierungsgeräte 13 - 17 können sowohl direkt mit Prozeßparametern versorgt werden, z.B. von den Pumpen, Druckstationen, Ventilen, Endschaltern etc. als auch mit den Daten von Arbeitsgeräten, z.B. Kränen. Ein solches Arbeitsgerät wird z.B. vorteilhaft über eine lokale Bedienungsstation 19 bedient, das mit dem Automatisierungsgerät 17 verbunden ist. Die einzelnen Parameter des Arbeitsgerätes werden, wie angedeutet, durch Signale 30, 31 und 32 ebenfalls auf ein Automatisierungsgerät, hier das Automatisierungsgerät 17, aufgegeben.

Die Prozeßparameter können sowohl direkt als auch bearbeitet, über eine mit Mikroprozessoren versehene Klemmleiste, wie sie beispielhaft mit 18 bezeichnet ist, auf die Automatisierungsgeräte, hier z.B. das Automatisierungsgerät 16, aufgegeben werden. Ebenso ist die Aufgabe durch einen Neben-Bus 11, der die Automatisierungsgeräte 26, 27 und 28 miteinander verbindet, möglich, wie es bei dem Automatisierungsgerät 14 gezeigt ist. Insgesamt handelt es sich um ein beliebig abwandelbares Automatisierungssystem, in dem in erfindungsgemäßer Weise eine beliebige Verknüpfung der einzelnen Prozeßparameter miteinander über die Codierung automatisch programmiert erfolgt.

In jedem Fall, sowohl bei der Inbetriebnahme als auch bei späteren Änderungen, ergibt sich eine gegenüber der bisher üblichen Programmierung erhebliche Zeit- und Kostenersparnis. Für den Betreiber der Anlage entfällt zwar die eindeutige Zuordnung der einzelnen Datenpakete zu den Übertragungswegen, dies ist jedoch von untergeordnetem Interesse.

## Patentansprüche

1. Flexibles Automatisierungssystem für variable industrielle Prozesse, z.B. für die Prozesse auf einer Förderplattform für Öl oder Gas, mit über Busstrukturen (1) oder Punkt-zu-Punkt- Verbindungen verknüpften Automatisierungsgeräten (a...z), denen Prozeßvariable (P_{1,2,3...} P_{n,n+1,n+x}) in digitaler oder analoger Form aufgegeben werden, wobei die Busstrukturen (1) Kommunikationsschnittstellen (a1... z1) für den Abruf der Prozeßvariablen (P_{1,2,3...} P_{n,n+1,n+x}) aus den Automatisierungsgeräten (a...z) aufweisen und wobei jeder Prozeßvariablen (P_{1,2,3...}P_{n, n+1,n+x}) zum automatischen Ansprechen der Prozeßvariablen ein Abrufsignal in codierter Form zugeordnet ist.

2. Flexibles Automatisierungssystem nach Anspruch 1, **dadurch gekennzeichnet**, daß in den Programmen der einzelnen Automatisierungsgeräte (a...z) direkt und indirekt abrufbare Prozeßvariable (P_{1,2,3...}P_{n, n+1, n+x}) verwendet werden, wobei für den Abruf physikalische und logische Definitionen der Kommunikationsschnittstellen (a1...z1 und ab...yz) für die Automatisierungsgeräte (a...z) vorgegeben werden.

3. Flexibles Automatisierungssystem nach Anspruch 1 oder 2, **dadurch gekennzeichnet**, daß die Adressierung der Abrufsignale für die codierten Prozeßvariablen (P_{1,2,3...}P_{n, n+1, n+x}) in einem virtuellen Adreßprozessor programmgesteuert durchgeführt wird.

4. Flexibles Automatisierungssystem nach Anspruch 3, **dadurch gekennzeichnet**, daß identische Prozeßvariable (P_{1,2,3...}P_{n, n+1, n+x}) mit gleicher, ortsunabhängiger Codierung versehen werden.

5. Flexibles Automatisierungssystem nach Anspruch 1, 2, 3 oder 4, **dadurch gekennzeichnet**, daß die in jedes Automatisierungsgerät (a...z) eingehenden Prozeßvariablen (P_{1,2,3...}P_{n, n+1, n+x}) mit einer Zusatzcodierung versehen werden, die kennzeichnend dafür ist, welche Prozeßvariablen (P_{1,2,3...}P_{n, n+1, n+x}) über die Kommunikationsschnittstellen (a1...z1 und ab...yz) des jeweiligen Automatisierungsgerätes (a...z) abrufbar sind.

6. Flexibles Automatisierungssystem nach Anspruch 1, 2, 3, 4, oder 5, **dadurch gekennzeichnet**, daß durch Vergleich der codierten Abrufsignale der Prozeßvariablen (P_{1,2,3...}P_{n, n+1, n+x}) eines Automatisierungsgerätes (a...z) mit den in den anderen Automatisierungsgeräten (a...z) verwendeten codierten Abrufsignalen der Prozeßvariablen (P_{1,2,3...}P_{n,} _{n+1, n+x}) die möglichen Kommunikationswege für den Abruf der Prozeßvariablen (P_{1,2,3...}P_{n, n+1, n+x}) festgelegt und dann damit die gewünschten Verbindungen automatisch aufgebaut werden.

7. Flexibles Automatisierungssystem nach Anspruch 1, 2, 3, 4, 5 oder 6, **dadurch gekennzeichnet**, daß für den automatischen Verbindungsaufbau manuell eine Untermenge der möglichen Verbindungen vorgegeben wird.

8. Flexibles Automatisierungssystem nach Anspruch 1, 2, 3, 4, 5, oder 6, **dadurch gekennzeichnet**, daß die Aufbaumöglichkeiten für Verbindungen in einem Informationssystem gespeichert und aus diesem abgerufen werden können.

9. Flexibles Automatisierungssystem nach einem oder mehreren der vorhergehenden Ansprüche, **dadurch gekennzeichnet**, daß zum Aufbau des zugehörigen Kommunikationsnetzes Abrufsignale in codierter Form verwendet werden.

## Claims

1. Flexible automation system for variable industrial processes, e.g. for processes on a conveyor platform for oil or gas, having programmable controllers (a...z) linked together via bus subsystems (1) or point-to-point connections, into which process variables (P_{1,2,3...} P_{n,} ₙ₊₁ ₙ₊ₓ) are fed in digital or analog form, wherein the bus subsystems have communication interfaces (a1...z1) for retrieving the process variables for automatic response of the process variables (P_{1, 2, 3...} P_{n, n+1} ₙ₊ₓ₎ from the programmable controllers (a...z) and wherein a coded retrieval signal is assigned to each process variable (P_{1,} _{2,} _{3...}P_{n,} _{n+1,} ₙ₊ₓ).

2. Flexible automation system according to claim 1, characterised in that in the programs of the individual programmable controllers (a...z) directly and indirectly retrievable process variables (P_{1,} _{2,} _{3...}P_{n,} _{n+1,} ₙ₊ₓ) are used, physical and logical definitions of the communication interfaces (a1...z1 and ab...yz) being specified for the programmable controllers (a...z).

3. Flexible automation system according to claim 1 or 2, characterised in that the addressing of the retrieval signals for the coded process variables (P_{1, 2, 3...} P_{n,} ₙ₊₁ ₙ₊ₓ) is carried out in a program-controlled manner in a virtual address processor.

4. Flexible automation system according to claim 3, characterised in that identical process variables (P_{1,2,3...} P_{n,} _{n+1,} ₙ₊ₓ) having identical coding independent of location are provided.

5. Flexible automation system according to claim 1, 2, 3 or 4, characterised in that the process variables (P₁_{, 2, 3...} P_{n,} _{n+1,} ₙ₊ₓ) input into every programmable controller (a...z) are provided with an extra code which is characteristic of which process variables (P₁_{, 2,3...}P_{n,} _{n+1,} ₙ₊ₓ) are retrievable via the communication interfaces (a1...z1 and ab...yz) of the respective programmable controller (a...z).

6. Flexible automation system according to claim 1, 2, 3, 4 or 5, characterised in that by comparison of the coded retrieval signals of the process variables (P_{1,2,3...}P_{n,} _{n+1,} ₙ₊ₓ) of one programmable controller (a...z) with the coded retrieval signals of the process variables (P_{1, 2, 3...}P_{n, n+1, n+x}) used in the other programmable controller (a...z), the possible communication channels for retrieval of the process variables (P_{1, 2, 3...}P_{n, n+1,n+x}) are established and then the desired connections are automatically formed.

7. Flexible automation system according to claim 1, 2, 3, 4, 5 or 6, characterised in that for the automatic formation of connections, a sub-quantity of the possible connections is specified manually.

8. Flexible automation system according to claim 1, 2, 3, 4, 5 or 6, characterised in that the options for forming connections in a data system can be stored and retrieved therefrom.

9. Flexible automation system according to one or more of the preceding claims, characterised in that, in order to build up the associated communication network, retrieval signals in coded form are used.

## Revendications

1. Système souple d'automatisation pour des processus industriels variables, par exemple pour les processus intervenant sur une plateforme d'extraction de pétrole ou de gaz, comportant des appareils d'automatisation (a...z), reliés par l'intermédiaire de structures de bus (1) ou selon des liaisons point-à-point et auxquels sont appliquées des variables de processus (P_{1,2,3...}P_{n,n+1,n+x}) sous forme numérique ou analogique, et dans lequel les structures de bus (1) possédant des interfaces de communication (a1...z1) pour l'appel des variables de processus (P₁_{,2,3...} P_{n,n+1,n+x}) à partir des appareils d'automatisation (a...z), et dans lequel un signal d'appel est associé, sous forme codé, à chaque variable de processus (P_{1,2,3...} P_{n,n+1, n+x}) pour la réponse automatique des variables de processus.

2. Système souple d'automatisation suivant la revendication 1, caractérisé par le fait qu'on utilise des variables de processus (P_{1,2,3...}P_{n,n+1,n+x}), qui peuvent être appelées directement et indirectement dans les programmes des différents appareils d'automatisation (a...z), auquel cas, pour l'appel, des définitions physiques et logiques des interfaces de communication (a1...z1 et ab...yz) sont prédéterminées pour les appareils d'automatisation (a...z).

3. Système souple d'automatisation suivant la revendication 1 ou 2, caractérisé par le fait que l'adressage des signaux d'appel pour les variables de processus codés (P_{1,2,3...} P_{n,n+1,n+x}) est exécuté d'une manière commandée par programme dans un processeur d'adresses virtuels.

4. Système souple d'automatisation suivant la revendication 3, caractérisé par le fait que les variables de processus identiques (P_{1,2,3...} P_{n,n+1,n+x}) sont pourvues du même code qui est indépendant du lieu.

5. Système souple d'automatisation suivant la revendication 1, 2, 3 ou 4, caractérisé par le fait que les variables de processus (P_{1,2,3...}P_{n,n+1,n+x}), qui interviennent dans chaque appareil d'automatisation (a...z), sont pourvues d'un code supplémentaire qui est caractéristique des variables de processus (P_{1,2,3...} P_{n,n+1,n+x}) qui peuvent être appelées par l'intermédiaire des interfaces de communication (a1...z1 et ab...yz) de l'appareil respectif d'automatisation (a...z).

6. Système souple d'automatisation suivant la revendication 1, 2, 3, 4 ou 5, caractérisé par le fait que les voies de communication possibles pour l'appel des variables de processus (P_{1,2,3...} P_{n+n+1,n+x}) sont fixées par comparaison des signaux d'appel codés des variables de processus (P_{1,2,3...} P_{n,n+1,n+x}) d'un appareil d'automatisation (a...z) aux signaux d'appels codés des variables de processus (P_{1,2,3...} P_{n,n+1,n+x}), utilisés dans les autres appareils d'utilisation (a...z), et qu'ensuite des liaisons désirées sont établies automatiquement au moyen de ces voies de communication.

7. Système souple d'automatisation suivant la revendication 1, 2, 3, 4, 5 ou 6, caractérisé par le fait que pour l'établissement automatique des liaisons, une quantité partielle de liaisons possibles est prédéterminée manuellement.

8. Système souple d'automatisation suivant la revendication 1, 2, 3, 4, 5 ou 6, caractérisé par le fait que les possibilités d'établissement pour des liaisons sont mémorisées dans un système d'informations et peuvent être appelées à partir de ce système.

9. Système souple d'automatisation suivant une ou plusieurs des revendications précédentes, caractérisé par le fait que pour l'établissement du réseau associé de communications, on utilise les signaux d'appels sous forme codée.
